# DEMANDE DE BREVET EUROPEEN

(11) **EP 2 213 375 A1**
(43) Date de publication de la demande: **04.08.2010**
(21) Numéro de dépôt: 10305062.1
(22) Date de dépôt: 20.01.2010
(51) Int. Cl.: B03B 5/38

(54) **Installation de séparation par flottaison de particules métalliques et de particules plastiques**

(30) Priorité: 29.01.2009 FR 0950551
(71) Demandeur: Fargier, Cédric, 26120 Chabeuil (FR); Fargier, Fabienne, 26120 Chabeuil (FR)
(72) Inventeur: Fargier, Cédric, 26120 Chabeuil (FR); Fargier, Fabienne, 26120 Chabeuil (FR)
(74) Mandataire: Thivillier, Patrick

(57) **Abrégé**

Installation de séparation de particules métalliques et de particules plastiques comprenant :
- une cuve (1), dans laquelle sont versées lesdites particules, et contenant un liquide (L) résultant d'un mélange d'eau et de chlorure de calcium dans des proportions déterminées pour obtenir une densité d'eau comprise entre 1,3 et 1,4, afin de permettre la flottaison des particules plastiques seulement (PP), et l'immersion et le coulage des particules métalliques (PM) ;
- des moyens (8) d'évacuation des particules métalliques (PM) disposés dans le fond de la cuve (1) ;
- des moyens (3) d'évacuation des particules plastiques (PP) disposés dans la partie supérieure de la cuve, au niveau de la ligne de flottaison ;
- des moyens de récupération (6) et de recyclage (7) du liquide.

## Description

L'invention se rattache au secteur technique du traitement des déchets, notamment sous forme de particules métalliques et de particules plastiques.

Le tri sélectif des déchets, en vue de leur récupération et recyclage, est désormais une priorité. Ainsi, lorsqu'un produit arrive en fin de vie ou simplement lorsqu'il est nécessaire de le changer pour d'autres considérations économiques ou esthétiques, il est important de pouvoir recycler ce produit pour, éventuellement, un autre usage.

C'est le cas, par exemple, des menuiseries utilisées dans le bâtiment dont l'ossature peut résulter d'une combinaison de plusieurs matériaux, notamment l'aluminium et le plastique.

Typiquement, pour le recyclage de ces produits, on procède à une opération de broyage afin d'obtenir un mélange de particules de métal et de particules de matière plastique. Il convient ensuite de trier ces différentes particules en séparant les particules métalliques, des particules plastiques.

Différentes solutions techniques peuvent être utilisées. On peut, par exemple, réaliser une séparation en utilisant les courants de Foucault qui ont pour effets d'éjecter les particules métalliques.
Cette solution nécessite de procéder à un broyage permettant d'obtenir des particules très fines nécessitant, par conséquent, une énergie importante engendrant des coûts élevés. De même, les cadences de tri et de séparation ne sont pas très élevées.
Les mêmes inconvénients se retrouvent dans le cas de l'utilisation d'une table de densimétrie apte à assurer la séparation des particules métalliques et des particules plastiques qui, par définition, sont de densité différente.

L'invention s'est fixée pour but de remédier à ces inconvénients d'une manière simple, sûre, efficace et rationnelle.

Le problème que se propose de résoudre l'invention est de pouvoir séparer des particules métalliques et des particules plastiques, selon des cadences élevées et à partir d'un broyage grossier, afin de diminuer la consommation.

Pour résoudre un tel problème, il a été conçu et mis au point une installation conforme aux caractéristiques de la revendication 1.

Pour résoudre le problème posé de récupérer les particules plastiques, les moyens d'évacuation sont constitués par des arbres rotatifs disposés au niveau de la ligne de flottaison et équipés de pales pour diriger les particules plastiques flottantes en direction d'un ensemble d'extraction.
L'ensemble d'extraction comprend un collecteur dont le fond est équipé d'une vis sans fin pour l'évacuation des particules plastiques, ledit collecteur étant en communication, par l'intermédiaire d'une paroi perforée, avec les moyens de récupération et de recyclage du liquide.
La paroi perforée est disposée, d'une manière inclinée, en continuité avec la ligne de flottaison.

Pour résoudre le problème posé de récupérer les particules métalliques, les moyens d'évacuation sont constitués par une vis sans fin.

Selon une autre caractéristique, les moyens de récupération et de recyclage du liquide sont constitués par une cuve et une pompe reliée à la cuve où sont versées les particules. L'installation comprend également des moyens d'alimentation et de dosage des particules.

A noter que l'ensemble de l'installation met en oeuvre le principe des machines de lavage par flottaison.

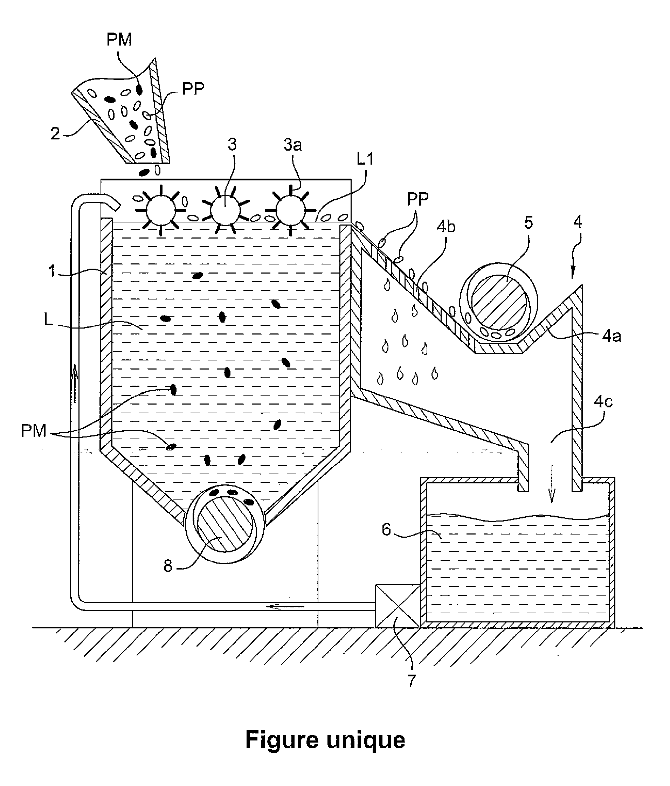

L'invention est exposée ci-après plus en détail à l'aide de l'unique figure du dessin annexé qui montre, par une vue à caractère purement schématique, le principe de séparation et de récupération des particules plastiques et des particules métalliques.

Comme indiqué, le problème que se propose de résoudre l'invention est de pouvoir réaliser, par exemple, après une opération de broyage, la séparation des particules plastiques (PP) et des particules métalliques (PM), notamment en aluminium ou alliage d'aluminium. Par définition, les particules (PP) et les particules (PM) sont de densité différente.

Par particules plastiques (PP), on entend, par exemple, les particules de polypropylène, de polyéthylène, de polyamide, de polychlorure de vinyle...

Selon le principe à la base de l'invention, on utilise une machine de lavage par flottaison. Le liquide (L) résulte d'un mélange apte à permettre la flottaison des particules plastiques (PP) seulement et le coulage des particules métalliques (PM).

Dans ce but, le liquide (L) est un mélange d'eau et de chlorure de calcium. Des résultats avantageux ont été obtenus lorsque l'on rajoute entre environ 500 et 600 kg de chlorure de calcium par m3 d'eau. Plus particulièrement, la quantité de chlorure de calcium est déterminée pour obtenir une densité de l'eau comprise entre 1,3 et 1,4, ce qui évite de la chauffer tout en évitant le phénomène de cristallisation des particules (PP).

Le liquide (L) est contenu dans une cuve (1) dans laquelle sont versées, en vrac, les particules (PP) et (PM). Par exemple, les particules (PP) et (PM) sont versées à partir d'une trémie (2) au niveau supérieur de la cuve, c'est-à-dire au-dessus de la ligne de flottaison (L1) constituée par le niveau supérieur du liquide (L). Comme indiqué, compte tenu de la nature du liquide (L), après déversement des différentes particules, les particules (PP) restent à la surface du liquide (L), c'est-à-dire au niveau de la ligne de flottaison (L1), tandis que les particules (PM) tombent, par gravité, dans le fond de la cuve (1).

A partir de ce principe de séparation des particules (PP) et des particules (PM), il convient de les extraire d'une manière séparée.

Dans ce but, pour l'évacuation des particules (PP), des arbres rotatifs (3) sont disposés parallèlement dans la partie supérieure de la cuve (1), au niveau de la ligne de flottaison (L1). Ces différents arbres (3) sont équipés, selon leur génératrice, de pales (3a) qui, au fur et à mesure de la rotation desdits arbres (3), plongent dans le liquide pour provoquer, d'une manière concomitante, le déplacement des particules (PP), en vue de leur évacuation.

Par exemple, si les arbres motorisés sont entraînés selon le sens trigonométrique, les pales (3a) déplacent les particules (PP) de la gauche à la droite, en direction d'un ensemble d'extraction (4). A noter que la partie supérieure de la cuve peut présenter des agencements pour créer un courant apte à accélérer l'évacuation de particules (PP).

Cet ensemble d'extraction (4) comprend un collecteur (4a) dont le fond est équipé d'une vis sans fin (5) pour l'évacuation des particules (PP). Avantageusement, le collecteur (4a) est en communication, par l'intermédiaire d'une paroi perforée (4b), avec des moyens (6), (7) de récupération et de recyclage du liquide.

Ainsi, la paroi perforée (4b) est disposée d'une manière inclinée, en continuité avec la ligne de flottaison (L1). Cette paroi (4b) communique avec une tuyère (4c) pour diriger le liquide en provenance de la cuve (1) dans le moyen de récupération (6) sous forme, par exemple, d'une cuve. Le recyclage en tant que tel est effectué par une pompe (7). La pompe (7) est donc conformée pour créer un effet d'aspiration de l'eau en provenance de la cuve (1) et de refoulement de l'eau pompée dans la cuve (1). Eventuellement, si la puissance d'aspiration de la pompe (7) est élevée, les particules plastiques (PP) peuvent, dans ce cas, simplement être aspirées, à partir du collecteur (4), ce qui peut permettre d'éviter, dans ce cas, l'utilisation des arbres d'entraînement (3).

Pour l'évacuation des particules métalliques (PM), le fond de la cuve (1) est équipé d'une vis sans fin (8).

Bien évidemment, sans pour cela sortir du cadre de l'invention, différents moyens constitutifs de l'installation sont assujettis à tout organe de commande. Il en est de même en ce qui concerne la trémie de décantation en particules (2) qui peut être assujettie à tout moyen pour distribuer lesdites particules, selon des cadences déterminées. Le dosage de liquide (L) (eau + chlorure de calcium) peut être fait en continu et adapté, si nécessaire, en fonction de la densité des particules (PP) et (PM).

Les particules (PP) extraites par la vis sans fin (5) et les particules (PM) extraites par la vis sans fin (8), peuvent être évacuées par des convoyeurs sur des lieux de stockage quelconques.

Les avantages ressortent bien de la description, en particulier on souligne et on rappelle la possibilité de séparer les particules à partir d'un broyage grossier diminuant, d'une manière significative, la consommation d'énergie. De plus, outre la diminution des coûts, il convient de noter la qualité de séparation obtenue, avec un débit relativement élevé.

## Revendications

1. Installation de séparation de particules métalliques (PM) et de particules plastiques (PP), **caractérisée en ce qu'**elle comprend :
- une cuve (1), dans laquelle sont versées lesdites particules, et contenant un liquide (L) résultant d'un mélange d'eau et de chlorure de calcium dans des proportions déterminées pour obtenir une densité d'eau comprise entre 1,3 et 1,4, afin de permettre la flottaison des particules plastiques seulement (PP), et l'immersion et le coulage des particules métalliques (PM) ;
- des moyens (8) d'évacuation des particules métalliques (PM) disposés dans le fond de la cuve (1) ;
- des moyens (3) d'évacuation des particules plastiques (PP) disposés dans la partie supérieure de la cuve, au niveau de la ligne de flottaison ;
- des moyens de récupération (6) et de recyclage (7) du liquide.

2. Installation selon la revendication 1, **caractérisée en ce que** les moyens d'évacuation des particules plastiques sont constitués par des arbres rotatifs (3) disposés au niveau de la ligne de flottaison et équipés de pales (3a) pour diriger les particules plastiques flottantes (PP) en direction d'un ensemble d'extraction (4).

3. Installation selon la revendication 2, **caractérisée en ce que** l'ensemble d'extraction (4) comprend un collecteur (4a) dont le fond est équipé d'une vis sans fin (5) pour l'évacuation des particules plastiques (PP), ledit collecteur étant en communication, par une paroi perforée (4b), avec les moyens de récupération (6) et de recyclage (7) du liquide.

4. Installation selon l'une quelconque des revendications 1 et 2, **caractérisée en ce que** la paroi perforée (4b) est disposée, d'une manière inclinée, en continuité avec la ligne de flottaison.

5. Installation selon la revendication 1, **caractérisée en ce que** les moyens d'évacuation des particules métalliques (PM) sont constitués par une vis sans fin (8).

6. Installation selon la revendication 1, **caractérisée en ce que** les moyens de récupération et de recyclage du liquide sont constitués par une cuve (6) et une pompe (7) reliée à la cuve (1) où sont versées les particules (PP) et (PM).

7. Installation selon l'une quelconque des revendications 1 à 6, **caractérisée en ce qu'**elle comprend des moyens d'alimentation et de dosage des particules (PP) et (PM).
